# EUROPÄISCHE PATENTSCHRIFT

(11) **EP 2 855 568 B1**
(45) Veröffentlichungstag und Bekanntmachung des Hinweises auf die Patenterteilung: **04.04.2018**
(21) Anmeldenummer: 13726516.1
(22) Anmeldetag: 03.06.2013
(51) Int. Cl.: C08J 9/00, C08K 3/36, C08G 18/12, C08K 7/26, C08G 101/00

(54) **AEROGEL ENTHALTENDER POLYURETHAN-VERBUNDWERKSTOFF**
POLYURETHANE COMPOUND MATERIAL CONTAINING AEROGEL
AÉROGEL COMPRENANT UNE MATIÈRE COMPOSITE À BASE DE POLYURÉTHANE

(30) Priorität: 04.06.2012 EP 12170650
(43) Veröffentlichungstag der Anmeldung: 08.04.2015
(73) Patentinhaber: BASF SE, 67056 Ludwigshafen am Rhein (DE)
(72) Erfinder: ELING, Berend, 49448 Lemförde (DE); AUFFARTH, Stefan, 49451 Holdorf (DE)
(74) Vertreter: BASF IP Association
(86) Internationale Anmeldenummer: PCT/EP2013/061349
(87) Internationale Veröffentlichungsnummer: WO 2013/182506

(56) Entgegenhaltungen:
- EP-A2- 0 667 370
- WO-A1-2012/076489
- WO-A1-2012/076506
- DE-A1- 19 622 865
- US-A1- 2006 281 825

## Beschreibung

Die Erfindung betrifft ein Verbundmaterial, enthaltend nanoporöse Partikel, nämlich Aerogele oder Aerosile und wenigstens ein Bindemittel, ein Verfahren und eine Zusammensetzung zur Herstellung des Verbundmaterials, sowie die Verwendung des Verbundmaterials.
Aerogele und Aerosile sind hochporöse Festkörper, bei denen der überwiegende Teil des Volumens aus Poren besteht. Die Aerogele können beispielsweise auf Silikat-Basis, aber auch auf Kunststoff- oder Kohlenstoff-Basis basieren. Die Poren der Aerogele weisen einen Durchmesser auf, der im Nanometer-Bereich liegt. Infolge des großen Porenvolumens eignen sich die Aerogele insbesondere als Wärmedämmungsmaterialien mit hervorragenden Dämmeigenschaften bei geringer Dichte. Die Aerogele liegen zunächst als Partikel vor und können unter Verwendung von Bindern einer Formgebung unterworfen und beispielsweise zu Platten gepresst werden.
In der Literatur werden Aerogele auch als Gele mit Luft als Dispersionsmittel bezeichnet. Aerogele können hergestellt werden durch Trocknung eines geeigneten Gels. Unter den Begriff Aerogel werden in Rahmen der vorliegenden Erfindung auch Xerogele und Kryogele verstanden. Der Formgebungsprozess des Aerogels wird während des Sol-Gel-Übergangs abgeschlossen. Nach Ausbildung der festen Gelstruktur kann die äußere Form nur noch durch Zerkleinern, beispielsweise Mahlen, verändert werden.
Aus der EP-A-0 340 707 sind Dämmstoffe der Dichte 0,1 bis 0,4 g/cm³ mit gutem Wärmedämmvermögen und ausreichend hoher Druckfestigkeit bekannt, welche durch Verkleben von Silica-Aerogel-Partikeln mit einem anorganischen oder organischen Bindemittel erhalten werden. Als geeignete anorganische Bindemittel werden beispielhaft Zement, Gips, Kalk und/oder Wasserglas genannt.
Aus der EP 489 319 A2 sind Verbundschaumstoffe auf Basis von Silica-Aerogel-Partikeln und eines Styrol-Polymerisat-Schaumstoffes bekannt. Aus der US-A-6121336 ist bekannt, die Eigenschaften von Polyurethanschäumen durch Einarbeitung von Silica-Aerogelen zu verbessern. Aus der DE 44 41 567 A1 ist bekannt, in Verbundmaterialien aus Aerogelen und anorganischen Bindemitteln Teilchendurchmesser der Aerogel-Partikel kleiner als 0,5 mm zu wählen.
Aus der EP 672 635 A1 ist bekannt, in Formkörpern aus Silica-Aerogelen und Bindemitteln zusätzlich Schichtsilikate oder Tonminerale einzusetzen. Aus der US-A-6143400 ist weiterhin bekannt, in Verbundmaterialien aus Aerogel-Partikeln und einem Klebstoff Aerogel-Partikel mit Durchmessern kleiner als 0,5 mm zu verwenden. Aus der DE 195 335 64 A1 sind Verbundmaterialien, enthaltend Aerogel-Partikel, Bindemittel und ein Fasermittel, bekannt. Aus der WO 2007/011988 A2 sind Zusammensetzungen mit so genannten Hybrid-Aerogel-Partikeln und einem Binder bekannt, worin die Aerogel-Partikel kovalent mit dem Binder verbunden sein können.

US 2008/0287561 A1 offenbart Komposit-Materialien, die wenigstens ein Polymer und wenigstens ein Aerogel enthalten. Um ein Eindringen des Polymers in das Aerogel zu verhindern, ist die Oberfläche des Aerogels beschichtet. US 2008/0287561 A1 offenbart, dass das Aerogel im Unterschuss bezogen auf das gesamte Komposit-Material vorhanden sein soll, so dass das Komposit-Material zum überwiegenden Teil aus Bindemittel besteht.
Für die Herstellung entsprechender Formkörper ist gemäß Stand der Technik häufig die Verwendung hoher Bindemittelgehalte notwendig. Darüber hinaus sind viele anwendungstechnische Eigenschaften wie beispielsweise Wärmeleitfähigkeit oder Bruchfestigkeit noch verbesserungsbedürftig. Probleme ergeben sich häufig auch bei der Herstellung der Formkörper. Zahlreiche organische Bindemittel sind aufgrund ihrer hohen Viskosität nicht verwendbar. Die Verwendung niedrigviskoser Dispersionen erfordert hierbei häufig eine zu große Verdünnung mit wässrigen Lösungsmitteln, was den Nachteil hat, dass das in den Dispersionen vorliegende Bindemittel, infolge fehlender Benetzung der Aerogeloberfläche, keine Verbindung mit den in der Regel hydrophoben Silica-Aerogel-Partikeln eingeht.
Aufgabe der Erfindung was es daher, Verbundmaterialien bereitzustellen, die bei relativ geringem Bindemittelanteil eine verbesserte, d. h. reduzierte, Wärmeleitfähigkeit und eine niedrige Dichte aufweisen. Es soll auch ein geringer Bindemittelanteil erzielt werden, so dass eine besonders niedrige Brandlast des Verbundmaterials erreicht werden kann. Die Verbundmaterialien sollen des Weiteren ein besonders effektives Bindemittel enthalten, so dass schon bei besonders geringer Menge an Bindemittel eine besonders gute Haftung erzielt wird. Die Verbundmaterialien sollen sich außerdem, beispielsweise durch verbesserte Anwendbarkeit von organischen Bindemitteln, auf einfache Weise herstellen lassen. Des Weiteren sollen Verbundmaterialien bereitgestellt werden, die eine zumindest teilweise offenporige Struktur aufweisen und dadurch durchlässig für Feuchtigkeit sind.

Diese Aufgaben werden erfindungsgemäß gelöst durch ein Verbundmaterial gemäß Anspruch 1, enthaltend nanoporöse Partikel und wenigstens ein Bindemittel aufgebaut aus wenigstens einem Isocyanat und wenigstens einem Polymer P ausgewählt aus der Gruppe bestehend aus Polyvinylamin, Polyvinylalkohol, Polyvinylthiol und Mischungen davon, wobei das wenigstens eine Bindemittel in einer Menge von 0,1 bis 20 Gew.-%, bezogen auf die Menge an nanoporösen Partikeln, eingesetzt wird.
Die Aufgaben werden des Weiteren gelöst durch eine Zusammensetzung zur Herstellung eines erfindungsgemäßen Verbundmaterials gemäß Anspruch 8, enthaltend nanoporöse Partikel, wenigstens ein Isocyanat und wenigstens ein Polymer P ausgewählt aus der Gruppe bestehend aus Polyvinylamin, Polyvinylalkohol, Polyvinylthiol und Mischungen davon.
Die Aufgaben werden des Weiteren gelöst durch ein Verfahren zur Herstellung eines erfindungsgemäßen Verbundmaterials gemäß Anspruch 9, wobei die nanoporösen Partikel, das wenigstens eine Isocyanat und das wenigstens eine Polymer P ausgewählt aus der Gruppe bestehend aus Polyvinylamin, Polyvinylalkohol, Polyvinylthiol und Mischungen davon vermischt werden, eine Vernetzung durch Reaktion des wenigstens einen Isocyanates und des wenigstens einen Polymers P durchgeführt wird, und das so erhaltene Material a) direkt einer Formgebung und gegebenenfalls Härtung unterworfen wird, oder b) das Material granuliert, gelagert und bei Bedarf einer Formgebung und gegebenenfalls Härtung unterworfen wird.
Die Aufgaben werden des Weiteren gelöst durch Formkörper, insbesondere Platten, aus einem erfindungsgemäßen Verbundmaterial und wenigstens einem weiteren Schaumstoff, insbesondere Polyurethan und/oder Polystyrol, durch Formkörper aus einem erfindungsgemäßen Verbundmaterial, auf das wenigstens eine Deckschicht kaschiert ist, sowie die Verwendung eines erfindungsgemäßen Verbundmaterials oder eines erfindungsgemäßen Formkörpers zur Wärme- und/oder Schalldämmung.
Soweit nicht anders ausgeführt, werden im Rahmen der vorliegenden Erfindung die verwendeten Begriffe wie folgt definiert und die genannten Messgrößen wie folgt bestimmt:
- Partikel:: Als Partikel werden Teilchen bezeichnet, die entweder monolithisch sind, d. h. aus einem Stück bestehen, oder aber die im Wesentlichen Partikel mit einem Durchmesser kleiner als der des Teilchens enthalten, die gegebenenfalls durch ein geeignetes Bindemittel verbunden sind, oder durch Pressen zu größeren Teilchen zusammengefügt sind.
- Porosität:: Verhältnis von Hohlraumvolumen zu Gesamtvolumen, gemessen gemäß Stickstoffadsorption und -desorption (< 100 nm) und Quecksilberporosimetrie (> 100 nm)
- Offenporigkeit:: Verhältnis von Hohlraumvolumen der interpartikulären Zwickelräume zu Gesamtvolumen, gemessen gemäß EN 12087, Methode 2A, abtropfen. Das Volumen der interpartikulären Zwickelräume wird durch das von der Platte aufgenommene Wasservolumen nach einer Lagerung unter Wasser ermittelt.
- Hydrophob:: Unter hydrophoben Stoffen werden im Rahmen der vorliegenden Erfindung Stoffe verstanden, die bei Raumtemperatur einen Kontaktwinkel von mehr als 90° gegenüber Wasser aufweisen.
- Nanoporös:: Unter nanoporös wird verstanden, dass die Poren der Partikel im Allgemeinen eine Größe von 0,1 bis 500 nm, bevorzugt < 200 nm, besonders bevorzugt < 100 nm (d₅₀) aufweisen und die Porosität im Allgemeinen 50 bis 99, bevorzugt 70 bis 99, besonders bevorzugt 80 bis 99, beträgt.
- Granulär:: bedeutet, dass die Teilchen in einer Größe von im Allgemeinen 0,001 bis 100 mm, bevorzugt von 0,01 bis 10 mm (d₅₀) vorliegen, und das Verhältnis der längsten Raumachse zur kürzesten Raumachse der Partikel bevorzugt 4:1 bis 1:1 beträgt.
- Aerosil:: Unter Aerosil wird pyrogene Kieselsäure verstanden, die beispielsweise durch Hydrolyse von Siliziumtetrachlorid herstellbar ist und vorzugsweise eine Primärpartikelgröße von 5 bis 50 nm (d₅₀) aufweist.
- Molekulargewicht:: Die Molekulargewichtsangaben beziehen sich auf das Zahlenmittel Mn.
- d₅₀-Wert:: Korngröße, bei der 50% der Partikel kleiner und 50% größer sind als der angegebene Wert.
- Wasserlöslich:: Unter einem wasserlöslichen Stoff wird ein Stoff verstanden, der bei einem Gehalt von mindestens 0,5 Gew.-%, bevorzugt mindestens 1,0 Gew.-%, besonders bevorzugt mindestens 5 Gew.-%, mit Wasser ein einphasiges, optisch transparentes System bildet.
- Emulgierbar:: Unter einem emulgierbaren Stoff wird ein bei den herrschenden Bedingungen flüssiger Stoff verstanden, der bei einem Gehalt von mindestens 0,5 Gew.-%, bevorzugt mindestens 1,0 Gew.-%, besonders bevorzugt mindestens 5 Gew.-%, mit Wasser ein stabiles System bildet, welches über einen längeren Zeitraum (> 5 Tage) einphasig bleibt. Die Emulsion kann dabei von optisch nahezu klar und farblos über leicht bläulich bis zu milchig und trüb erscheinen.
- Dispergierbar:: Unter einem dispergierbaren Stoff wird ein bei den herrschenden Bedingungen fester Stoff verstanden, der bei einem Gehalt von mindestens 0,5 Gew.-%, bevorzugt mindestens 1,0 Gew.-%, besonders bevorzugt mindestens 5,0 Gew.-% mit Wasser ein stabiles System bildet, welches über einen längeren Zeitraum (> 5 Tage) einphasig bleibt. Die Dispersion kann dabei von optisch nahezu klar und farblos über leicht bläulich bis zu milchig und trüb erscheinen.

Bevorzugte Ausführungsformen der vorliegenden Erfindung werden im Folgenden angegeben, wobei sich die im Einzelnen angegebenen Ausführungsformen auch kombinieren lassen.

### Nanoporöse Partikel

Bevorzugte nanoporöse Partikel sind granulär. Daher betrifft die vorliegende Erfindung bevorzugt das erfindungsgemäße Verbundmaterial, wobei die nanoprösen Partikel granulär sind.

Die nanoporösen Partikel sind Aerogele oder Aerosile. Diese können anorganisch, anorganisch-organisch oder organisch sein.
Geeignete Aerogele für die erfindungsgemäßen Verbundmaterialien sind insbesondere solche auf Basis von Oxiden, insbesondere Siliziumdioxid und Metalloxiden, wie insbesondere Aluminium-, Titan- und Zirkoniumoxid. oder solche auf der Basis organischer Stoffe, wie zum Beispiel Melaminformaldehydkondensate (US-A-5,086,085), Polyureakondensate (US 2011/0319508), Resorcinformaldehyd-Kondensate (US-A-4,873,218) sowie Aerogele, die durch Polymerisation von Furfural mit phenolischen Novolak-Harzen herstellbar sind. Besonders geeignet sind Verbindungen, die für die Sol-Gel-Technik geeignet sind, siehe z.B. WO 97/10188 A1, Seite 7, erster Absatz, beispielsweise Si- oder AI-Verbindungen. Die erfindungsgemäß eingesetzten Aerogele können auch auf Mischungen der oben genannten Materialien basieren.
Bevorzugt werden Aerogele enthaltend Si-Verbindungen. Besonders bevorzugt sind Aerogele enthaltend SiO₂, insbesondere SiO₂-Aerogele, die gegebenenfalls organisch modifiziert sind. Besonders bevorzugte Aerogele weisen folgende Parameter auf:

| | |
|---|---|
| Porosität: | 50 bis 99%, insbesondere 70 bis 99%, besonders bevorzugt 80 bis 99% |
| Dichte: | 30 bis 300 g/L, bevorzugt ≤ 150 g/L |
| Partikeldurchmesser: | 0,001 bis 100 mm, bevorzugt von 0,01 bis 10 mm (d₅₀) |
| Porendurchmesser: | 0,1 bis 500 nm, insbesondere < 200 nm, besonders bevorzugt < 100 nm |

Darüber hinaus gilt, dass die thermische Leitfähigkeit der Aerogele mit zunehmender Porosität und abnehmender Dichte abnimmt, und zwar bis zu einer Dichte im Bereich von 0,1 g/cm³. Aus diesem Grund sind Aerogele mit Porositäten über 60% und Dichten zwischen 0,1 und 0,4 g/cm³ bevorzugt. Die Wärmeleitfähigkeit der Aerogel-Schüttung sollte vorzugsweise weniger als 40 mW/m*K, besonders bevorzugt weniger als 25 mW/m*K, betragen.
Besonders bevorzugte Aerogele sind Silica-Aerogele, die im Wesentlichen amorphes Siliziumdioxid enthalten, weiter bevorzugt daraus bestehen, aber abhängig von der Art ihrer Herstellung zusätzlich organische Verbindungen enthalten können.
Silica-Aerogel-Partikel können in bekannter Weise aus Wasserglaslösung über die Stufen Silica-Hydrogel, Lösungsmittelaustausch und anschließender überkritischer Trocknung hergestellt werden. Die in der Regel vorliegende Perlform ergibt sich hierbei durch das Versprühen eines schnell gelierenden Kieselsäuresols aus einer speziell konstruierten Düse und Gelierung der Tropfen im Fluge. Nähere Einzelheiten hierzu sind in der DE-A-21 03 243 beschrieben. Der Austausch von Hydrogelwasser gegen andere gegenüber Siliziumdioxid chemisch inerte Flüssigkeiten sind beispielsweise in US-A-2,093,454, US-A-3,977,993 sowie JP-A-53/025 295 beschrieben.

Die Aerogel-Partikel können in monomodaler, bimodaler oder multimodaler Verteilung eingesetzt werden.

In einer bevorzugten Ausführungsform weisen die nanoporösen Partikel, insbesondere die Aerogel-Partikel, eine Beschichtung, insbesondere hydrophobe Oberflächengruppen, auf.

Die vorliegende Erfindung betrifft daher bevorzugt das erfindungsgemäße Verbundmaterial, wobei die nanoporösen Partikel, insbesondere die Aerogel-Partikel, eine Beschichtung, insbesondere hydrophobe Oberflächengruppen aufweisen.

Geeignete Gruppen zur dauerhaften Hydrophobisierung sind beispielsweise trisubstituierte Silylgruppen der allgemeinen Formel -Si(R)₃, vorzugsweise Trialkyl- und/oder Triarylsilylgruppen, wobei jedes R unabhängig ein nicht reaktiver, organischer Rest wie C₁-C₁₈-Alkyl oder C₆-C₁₄-Aryl, vorzugsweise C₁-C₆-Alkyl oder Phenyl, insbesondere Methyl, Ethyl, Cyclohexyl oder Phenyl ist, der zusätzlich noch mit funktionellen Gruppen substituiert sein kann. Besonders vorteilhaft zur dauerhaften Hydrophobisierung des Aerogels ist die Verwendung von Trimethylsilylgruppen, beispielsweise durch eine Modifizierung mit (Trimethylsilyl)oxy-Gruppen. Die Einbringung dieser Gruppen kann durch Gasphasenreaktion zwischen dem Aerogel und beispielsweise einem aktivierten Trialkylsilan-Derivat, wie beispielsweise einem Chlortrialkylsilan oder einem Hexaalkyldisilazan, vgl. R. Iler, The Chemistry of Silica, Wiley & Sons, 1979, geschehen.

Bevorzugt ist das Ausmaß der Hydrophobisierung hinreichend hoch zu bemessen, um dauerhaft ein Eindringen von Wasser in das Innere der nanoporösen Partikel zu verhindern. Gleichzeitig wird ein möglichst geringer Anteil an organischem Material der modifizierten Partikel angestrebt, um die Brennbarkeit der Partikel zu minimieren.

### Funktionalisierung der nanoporösen Partikel

Die nanoporösen Partikel, insbesondere Aerogele, können im Bindemittel fixiert werden. Die Fixierung der nanoporösen Partikel im Bindemittel kann durch Einführung von Reaktivgruppen in die Nanostruktur oder durch Einbringen geringer Mengen an Bindemitteln unterstützt werden.

Zur chemischen Funktionalisierung der nanoporösen Partikel, insbesondere der Aerogele, eignen sich beispielsweise funktionalisierte chemische Verbindungen wie Alkoxysilane, wie z.B. 3-Aminopropyl-triethoxysilan oder 3-Aminopropyl-trimethoxysilan. Diese Reaktivgruppen können beispielsweise in einem ersten Schritt über die Silan-Einheit an die nanoporösen Partikel, insbesondere die Aerogele, gebunden werden. In einem zweiten Schritt erlaubt die Aminogruppe eine chemische Anbindung an das Bindemittel.
Geeignete Systeme zur Funktionalisierung sind sehr ausführlich in der WO 2005103107 A1, Seite 9, Zeile 18 bis Seite 15, Zeile 4, beschrieben und sind in dieser Anmeldung ausdrücklich enthalten.

### Bindemittel

In dem erfindungsgemäßen Verbundmaterial liegt wenigstens ein Bindemittel aufgebaut aus wenigstens einem Isocyanat und wenigstens einem Polymer P ausgewählt aus der Gruppe bestehend aus Polyvinylamin, Polyvinylalkohol, Polyvinylthiol und Mischungen davon, vor. Die erfindungsgemäß geeigneten Polymere P enthalten Zeriwitinow-reaktive Gruppen.
Erfindungswesentlich ist, dass das wenigstens eine Bindemittel in einer besonders geringen Menge von 0,1 bis 20 Gew.-%, bevorzugt 4 bis 15 Gew.-%, besonders bevorzugt 5 bis 10 Gew.-%, jeweils bezogen auf die Menge an nanoporösen Partikeln, vorliegt. Erfindungsgemäß bedeutet das, dass die nanoporösen Partikel in einer entsprechend hohen Menge vorliegen, d. h. beispielsweise, dass auf 100 Gew.-Teile nanoporöse Partikel entsprechend 0,1 bis 20 Gew.-Teile, bevorzugt 4 bis 15 Gew.-Teile, besonders bevorzugt 5 bis 10 Gew.-Teile, Bindemittel vorliegen.
Erfindungsgemäß können im Allgemeinen alle dem Fachmann bekannten Isocyanate eingesetzt werden, bevorzugt weist das wenigstens eine Isocyanat ein Molekulargewicht von 84 bis 10.000 g/mol auf.
Die vorliegende Erfindung betrifft daher bevorzugt das erfindungsgemäße Verbundmaterial, wobei das wenigstens eine Isocyanat ein Molekulargewicht von 84 bis 10.000 g/mol aufweist.
Das wenigstens eine Isocyanat kann erfindungsgemäß ein monomolekulares Isocyanat, bevorzugt ein organisches Isocyanat, oder ein Prepolymer aus wenigstens einem Isocyanat und wenigstens einer Verbindung, die wenigstens eine gegenüber Isocyanatgruppen reaktive Gruppe enthält, sein.
Die vorliegende Erfindung betrifft daher bevorzugt das erfindungsgemäße Verbundmaterial, wobei das wenigstens eine Isocyanat ein organisches Isocyanat ist. Geeignet sind aliphatische, organische oder aromatische, organische Isocyanate, wobei aliphatische, organische Isocyanate erfindungsgemäß besonders bevorzugt sind.

Die vorliegende Erfindung betrifft auch bevorzugt das erfindungsgemäße Verbundmaterial, wobei das wenigstens eine Isocyanat ein Prepolymer aus wenigstens einem Isocyanat und wenigstens einer Verbindung enthaltend Zerewitinow-reaktive Gruppe enthält, ist.

Weiter bevorzugt ist das wenigstens eine Isocyanat wasseremulgierbar. Die vorliegende Erfindung betrifft daher bevorzugt das erfindungsgemäße Verbundmaterial, wobei das wenigstens eine Isocyanat wasseremulgierbar ist.

Als organische Isocyanate können allgemein bekannte aromatische, aliphatische, cycloaliphatische und/oder araliphatische Isocyanate, bevorzugt mit mindestens zwei Isocyanatgruppen, eingesetzt werden, beispielsweise 2,2'-, 2,4'- und/oder 4,4'-Diphenyl-methandiisocyanat (MDI), polymeres MDI, 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat und/oder Phenylendiisocyanat, Tri-, Tetra-, Penta-, Hexa-, Hepta- und/oder Octamethylendiisocyanat, 2-Methylpentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-Diisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat und/oder 4,4'-, 2,4'- und 2,2'-Dicyclohexylmethan-diisocyanat (H12MDI), bevorzugt 2,2'-, 2,4'- und/oder 4,4'-Diphenylmethandiisocyanat (MDI), polymeres MDI, 1,5-Naphthylendiisocyanat (NDI), 2,4-und/oder 2,6-Toluylendiisocyanat (TDI), Hexamethylendiisocyanat (HDI), 4,4'-, 2,4'- und 2,2'-Dicyclohexylmethan-diisocyanat (H12MDI) und/oder IPDI, insbesondere 4,4'- MDI und/oder Hexamethylendiisocyanat.

Besonders bevorzugte Isocyanate sind Hexamethylendiisocyanat HDI und Iosphorondiisocyanat (IPDI), vor allem niederflüchtige Derivate von diesen Isocyanaten wie Trimere, Dimere, Biuret und Allophanat.

Als wenigstens eine Verbindung, die wenigstens eine Zerewitinow-reaktive, d. h. eine gegenüber Isocyanatgruppen reaktive Gruppe, enthält, können allgemein bekannte gegenüber Isocyanaten reaktive Verbindungen eingesetzt werden, beispielsweise Polyesterole, Polyetherole, Polyetheramine und/oder Polycarbonatdiole, die üblicherweise auch unter dem Begriff "Polyole" zusammengefasst werden, mit einem zahlenmittleren Molekulargewicht (Mn) von 50 bis 12.000 g/mol, bevorzugt 100 bis 10.000 g/mol, insbesondere 200 bis 8.000 g/mol und einem Hydroxyl-Wert von 14 bis 1.839 mg KOH/g, insbesondere von 28 bis 600 mg KOH/g und einer Funktionalität von 2 bis 8, bevorzugt 2 bis 3, insbesondere 2.

In einer besonders bevorzugten Ausführungsform werden als Isocyanat-reaktive Verbindungen Polyole, insbesondere Polyalkylenglykole, insbesondere Polytetrahydrofuran (PTHF), Polybutylenglykole, Polypropylenglykole, Polyethylenglykole und Copolymere, hergestellt durch Anlagerung von Ethylenoxid, Butylenoxid und Propylenoxid, verwendet. Die Copolymere können eine Block- oder Mischstruktur aufweisen. Besonders bevorzugte Polypropylenglykole und Polybutylenglykole haben ein Molekulargewicht von 400 bis 10.000 g/mol insbesondere von 600 bis 8.000 g/mol und bevorzugt einer Funktionalität von 2 bis 8, besonders bevorzugt 2 bis 3.

Besonders bevorzugte Polyethylenglykole haben ein Molekulargewicht von 61 bis 8.000 g/mol, insbesondere von 200 bis 6.000 g/mol und bevorzugt einer Funktionalität von 2 bis 8, besonders bevorzugt 2 bis 3.

Weiter bevorzugt werden als, bevorzugt wasseremulgierbare, Isocyanate entsprechende, bevorzugt wasseremulgierbare, Prepolymere verwendet, die mit polyethylenoxidhaltigen Polymeren versetzt sind. Dazu können die obengenannten Polyethylenglykole verwendet werden. Weiter können auch Polyethylenoxid-Polymere mit folgender Struktur

RO(CH₂-CH₂O)ₙH,

worin
- R: ein Alkylradikal mit insbesondere 1 bis 4C-Atomen
- n: eine Zahl von 3 bis 50
bedeuten, verwendet werden.

Typische Beispiele solcher Komponenten sind Methoxypolyethylenglykole mit einem Molekulargewicht von 200 bis 2.000 g/mol, bevorzugt von 300 bis 1.000 g/mol. Prepolymere mit Alkylpolyethylenglykol sind bekannt aus GB 1528612.

In einer weiteren bevorzugten Ausführungsform ist die wenigstens eine zur Herstellung der Isocyanat-basierten Prepolymere verwendete Verbindung, die wenigstens eine Zerewitinow-reaktive Gruppe enthält, eine Isocyanat-reaktive Sulfonsäure. Diese Verbindungen werden Isocyanaten zugegeben um sie in Wasser emulgierbar zu machen. Geeignete Isocyanat-reaktive Sulfonsäuren sind dem Fachmann an sich bekannt und beispielsweise in EP 1287052 B1 beschrieben. Bevorzugte Isocyanat-reaktive Sulfonsäuren sind 2-(Cyclohexylamino)-ethansulfonsäure und/oder 3-(Cyclohexylamino)-propansulfonsäure.

Die vorliegende Erfindung betrifft daher bevorzugt das erfindungsgemäße Verbundmaterial, wobei die wenigstens eine zur Herstellung der Isocyanat-basierten Prepolymere verwendete Verbindung, die wenigstens eine Zerewitinow-reaktive Gruppe enthält, ein Polyol und/oder eine Sulfonsäure ist.

In einer weiteren Ausführungsform der Erfindung wird die Wasseremulgierbarkeit der Isocyanate, insbesondere der Isocyanat-basierten Prepolymere, durch Modifizierung der Prepolymere mit ionisierbaren Gruppen wie Aminosilanen, siehe WO 2010/112155 A2 und/oder ionischen Gruppen wie Carboxylaten, Phosphaten und Sulfaten, siehe DE-A-2 359 606, verbessert. Dieser Ansatz ist besonders geeignet, wenn wässrige Alkalisilikate und/oder kolloidale Kieselsole verwendet werden.

Die als Isocyanate erfindungsgemäß bevorzugt eingesetzten Prepolymere sind bevorzugt in Wasser emulgierbar, insbesondere bei Verwendung von Polyethylenglykolen mit einem Molekulargewicht von 200 bis 6.000 g/mol und/oder Alkylpolyethylenglykolen mit einem Molekulargewicht von 200 bis 2.000 g/mol.
Die vorliegende Erfindung betrifft daher bevorzugt das erfindungsgemäße Verbundmaterial, wobei das Polyol ein Polyethylenglycol mit einem Molekulargewicht von 200 bis 6.000 g/mol und/oder ein Alkylpolyethylenglykol mit einem Molekulargewicht von 200 bis 2.000 g/mol ist.
In einer weiteren bevorzugten Ausführungsform wird die Wasseremulgierbarkeit der Isocyanate, insbesondere der Prepolymere, durch die Verwendung von Tensiden und/oder anderen oberflächenaktiven Substanzen erreicht bzw. verbessert. Solche oberflächenaktive Substanzen beinhalten eine breite Palette an Benetzungsmitteln und Tensiden und wirken so, dass sie die Emulgierbarkeit des Polyurethanprepolymers in Wasser verbessern, wie beispielsweise beschrieben im Handbook of Industrial Surfactants, 4. Edition, Seiten 6279-6331. Emulsifizierungshilfsmittel schließen folgende ein, sind aber nicht auf diese beschränkt: Polyalkoxylate, Polyalkenglykole, Polyharnstoffe, Polyglykoside und Fettalkoholester.
Zur Herstellung von Emulsionen des Prepolymers wird in einer bevorzugten Ausführungsform Wasser verwendet, weil es die Viskosität der Prepolymere drastisch reduziert, nicht in die Poren der nanoporösen Partikel, insbesondere der Aerogele, eindringt und mit Isocyanat unter Bildung von Harnstoff reagiert. Gegebenenfalls kann man statt Wasser auch Wasserglas oder, gegebenenfalls wässrige, Silica-Sole einsetzen. Durch Einsatz dieser Medien kann der Anteil an anorganischen Verbindungen im Verbundmaterial erhöht werden. Auch können dem Wasser Komponenten zugegeben werden, die die Benetzung der nanoporösen Partikel, insbesondere der Aerogele, verbessern. Das Eindringen von Wasser in die Poren des Gels ist in der Regel kein Problem, weil die nanoporösen Partikel, insbesondere die Aerogele, bevorzugt stark wasserabweisende Eigenschaften haben. Dem Wasser können Komponenten zugegeben werden, die die Benetzung der Aerogele verbessern.

### Polymer P

Das in dem erfindungsgemäßen Verbundmaterial vorliegende Bindemittel ist neben dem beschriebenen wenigstens einen Isocyanat aus wenigstens einem Polymer P ausgewählt aus der Gruppe bestehend aus Polyvinylamin, Polyvinylalkohol, Polyvinylthiol und Mischungen davon, aufgebaut. Die erfindungsgemäß geeigneten Polymere P enthalten Zerewitinow-reaktive Gruppen, d. h. Gruppen, die mit Isocyanatgruppen reagieren können.
Im Allgemeinen sind Zerewitinow-aktive Gruppen polare Gruppen, die in der Regel auch mit Wasser Wechselwirkungen zeigen können. Polymere mit einer hohen Beladung an Zerewitinow-reaktiven Gruppen sind dadurch ab einem bestimmten Beladungsgrad mit Zerewitinowreaktiven Gruppen in der Regel auch wasserlöslich. Unterhalb dieses Beladungsgrades gibt es eine Beladungsbandbreite innerhalb derer solche Polymere in Wasser dispergierbar sind. Bei geringerer Beladung sind die Polymere weder wasserlöslich noch in Wasser dispergierbar.
Die erfindungsgemäß geeigneten Polymere P sind bevorzugt wasserlöslich oder wasserdispergierbar, besonders bevorzugt sind die Polymere P wasserlöslich.
Die vorliegende Erfindung betrifft daher bevorzugt das erfindungsgemäße Verbundmaterial, wobei das Polymer P wasserlöslich oder wasserdispergierbar ist.
Das erfindungsgemäß geeignete Polyvinylamin enthält wiederkehrende Vinylamin-Einheiten der Formel

-CH₂-CHNH₂-

Es handelt sich bei dem Polymer P um ein Polyvinylamin, mit einer Molmasse von 10.000 bis 1.000.000 g/mol, bevorzugt von 10.000 bis 500.000 g/mol. Zusätzlich zu den Aminogruppen kann die Polymerkette weitere Substituenten aufweisen, insbesondere Formamid-Reste.
In einer bevorzugten Ausführungsform ist das Polyvinylamin erhältlich durch radikalische oder kationisch initiierte Polymerisation von Vinylformamid und Hydrolyse der Formamid-Gruppen im sauren oder basischen Bereich. Die Hydrolyse kann dabei vollständig oder teilweise erfolgen. Der erfindungsgemäß geeignete Polyvinylalkohol enthält wiederkehrende Vinylalkohol-Einheiten der Formel

-CH₂-CHOH-

Es handelt sich bei dem Polymer P um einen Polyvinylalkohol, mit einer Molmasse von 10.000 bis 500.000 g/mol, bevorzugt von 20.000 bis 200.000 g/mol, besonders bevorzugt 30.000 bis 100.000 g/mol. Zusätzlich zu den Hydroxygruppen kann die Polymerkette weitere Substituenten aufweisen, insbesondere Alkyl- oder Aryl-Reste, sowie durch Co-Monomere eingebaute oder aufgepfropfte Seitenketten wie z.B. Butyral.
Polyvinylalkohole können durch Umesterung oder durch alkalische Verseifung (Hydrolyse) von Polyvinylacetat gewonnen werden. Weiter sind auch Polyvinylalkoholcopolymerisate bevorzugt, die aus Polyvinylacetatcopolymeren gewonnen werden können.

Die Hydrolyse kann dabei vollständig oder teilweise, beispielsweise zu 70 bis 99%, bevorzugt 80 bis 90%, erfolgen. Der Hydrolysierungsgrad der bevorzugten Polymere liegt je nach Einsatzzweck bei 70 bis 100 Mol-%. Wurde nur teilverseift, können die verbliebenen Acetylgruppen in Abhängigkeit vom Verfahren statistisch oder blockartig im Polymer verteilt vorliegen. Die Verteilung dieser Acetylgruppen kann Eigenschaften wie Schmelzpunkt, Oberflächenspannung von wässrigen Lösungen oder Schutzkolloideigenschaften beeinflussen.
Es hat sich gezeigt, dass nicht vollständig hydrolysierte Polymere Vorteile in der Herstellung der Kompositplatten bezüglich der Haftung aufweisen.

Das erfindungsgemäß geeignete Polyvinylthiol enthält wiederkehrende Vinylthiol-Einheiten der Formel

-CH₂-CHSH-

Es handelt sich bei dem Polymer P um ein Polyvinylthiol, mit einer Molmasse von 10.000 bis 500.000 g/mol, bevorzugt von 20.000 bis 200.000 g/mol, besonders bevorzugt 30.000 bis 100.000 g/mol. Zusätzlich zu den Thiolgruppen kann die Polymerkette weitere Substituenten aufweisen, insbesondere Alkyl- oder Aryl-Reste (sowie durch Co-Monomere eingebaute oder aufgepfropfte Seitenketten wie z.B. Butyral.
Erfindungsgemäß weiter bevorzugt werden Mischungen von zwei oder mehr der genannten Polymeren P eingesetzt, insbesondere Mischungen enthaltend ein Polyvinylamin und einen Polyvinylalkohol.

In den bevorzugt eingesetzten Mischungen von zwei oder mehr der oben genannten Polymeren P liegen die einzelnen Polymere P in einer Menge von beispielsweise jeweils 1 bis 99 Gew.-%, bevorzugt 15 bis 85 Gew.-%, besonders bevorzugt 20 bis 80 Gew.-%, vor, wobei die Summe der vorliegenden Polymere P jeweils 100 Gew.-% ergibt.

Erfindungsgemäß bevorzugt ist eine Mischung enthaltend 10 bis 50 Gew.-%, bevorzugt 15 bis 40 Gew.-%, besonders bevorzugt 20 bis 30 Gew.-% eines Polyvinylalkohols und 50 bis 90 Gew.-%, bevorzugt 60 bis 85 Gew.-%, besonders bevorzugt 70 bis 80 Gew.-% eines Polyvinylamins, wobei die Summe jeweils 100 Gew.-% ergibt.

Zusätzlich zu dem erfindungsgemäßen Bindemittel, d.h. dem Polymer P, können weitere organische, bzw. anorganische Bindemittel in einer Menge von 0,1 bis 50 Gew.-%, bezogen auf das Bindemittel aufgebaut aus wenigstens einem Isocyanat und wenigstens einem Polymer, eingesetzt werden. Weitere geeignete organische Bindemittel sind beispielsweise die aus der EP 672 635 A1 bekannten Bindemittel, wie Reaktionsklebstoffe wie Epoxidharz-Klebstoffe, Phenol-, Resorcin-, Harnstoff- und Melaminformaldehyd-Harze, Silikonharz-Klebstoffe, Polyimid- und Polybenzimidazol-Harze, Schmelzklebstoffe wie Ethylenvinylacetat-Copolymere und Polyamide, Wachse, sowie wässrige Dispersionsklebstoffe wie Styrol-Butadien- und Styrol-Acrylester-Copolymerisate. Das Bindemittel kann zusätzlich, wie beispielsweise in der EP 06 72 625 A1 angegeben, Schichtsilikate und/oder Tonmineralien enthalten.

### Additive

Das Verbundmaterial kann in wirksamen Mengen weitere Zusatzstoffe, beispielsweise Farbstoffe, Pigmente, Füllstoffe, Flammschutzmittel, Synergisten für Flammschutzmittel, Antistatica, Stabilisatoren, Weichmacher und IR-Trübungsmittel enthalten.

Zur Reduktion des Strahlungsbeitrags zur Wärmeleitfähigkeit kann das Verbundmaterial IR-Trübungsmittel, beispielsweise Melamin, Metalloxide, Nichtmetalloxide, Metallpulver, beispielsweise Aluminiumpulver, Kohlenstoff, beispielsweise Ruß, Graphit, Diamant oder organische Farbstoffe und Farbstoffpigmente enthalten, was besonders für Anwendungen bei hohen Temperaturen vorteilhaft ist. Besonders bevorzugt sind Ruß, Titandioxid, Eisenoxide oder Zirkondioxid. Die vorstehend genannten Materialien können sowohl jeweils alleine als auch in Kombination, d. h. in Form einer Mischung aus mehreren Materialien, Verwendung finden.

Im Hinblick auf die Rissbildung und Bruchfestigkeit kann es weiterhin vorteilhaft sein, wenn in dem Verbundmaterial Fasern enthalten sind. Als Fasermaterial können organische Fasern wie zum Beispiel Polypropylen-, Polyester-, Nylon- oder Melaminformaldehydfasern und/oder anorganische Fasern, wie zum Beispiel Glas-, Mineral- sowie SiC-Fasern und/oder Kohlenstofffasern sowie auch Carbon Nanotubes verwendet werden.

Als Füllstoffe können beispielsweise Schichtsilikate, Tonmineralien, Metalloxide, Kieselgel, Glaskugeln sowie weitere dem Fachmann bekannte Füllstoffe sowie deren Mischungen eingesetzt werden.

Die Brandklasse des nach der Trocknung erhaltenen Verbundmaterials wird durch die Brandklasse der nanoporösen Partikel, sowie gegebenenfalls die des Fasermaterials bestimmt. Um eine möglichst günstige Brandklasse des Verbundmaterials zu erhalten (schwer entflammbar oder unbrennbar), sollten ggf. vorliegende Fasern aus nicht brennbarem Material, beispielsweise Mineral-, Glas- oder SiC-Fasern, bestehen.

Um eine Erhöhung der Wärmeleitfähigkeit durch die zugegebenen Fasern zu vermeiden, sollte der Volumenanteil der Fasern bevorzugt 0,1 bis 30 Gew.-%, besonders bevorzugt 1 bis 10 Gew.-%, jeweils bezogen auf das gesamte Verbundmaterial, betragen.

Durch geeignete Wahl von Faserdurchmesser und/oder -material kann der Strahlungsbeitrag zur Wärmeleitfähigkeit reduziert und eine größere mechanische Festigkeit erzielt werden. Dazu sollte der Faserdurchmesser vorzugsweise im Bereich von 0,1 bis 30 µm liegen. Der Strahlungsbeitrag zur Wärmeleitfähigkeit kann besonders reduziert werden, wenn Kohlenstofffasern oder kohlenstoffhaltige Fasern verwendet werden.

Die mechanische Festigkeit kann weiter durch Länge und Verteilung der Fasern im Verbundmaterial beeinflusst werden. Bevorzugt werden Fasern eingesetzt, deren Länge zwischen 0,5 und 10 cm liegt. Für plattenförmige Formkörper können auch Gewebe aus Fasern verwendet werden.

Außerdem kann das Verbundmaterial weitere Hilfsstoffe, wie beispielsweise Tylose, Stärke und/oder Wachsemulsionen enthalten, wie sie im Stand der Technik großtechnisch bei der Formgebung von keramischen Massen eingesetzt werden.

Weiterhin kann das Verbundmaterial Zusatzstoffe enthalten, die zu seiner Herstellung benutzt werden, bzw. bei der Herstellung entstehen, so beispielsweise Gleitmittel zum Verpressen, wie Zinkstearat, oder die Reaktionsprodukte von sauren bzw. säureabspaltenden Härtungsbeschleunigern bei der Verwendung von Harzen.

Die Brandklasse des Verbundmaterials wird durch die Brandklasse der nanoporösen Partikel, ggf. der Fasern und des Bindemittels sowie weiterer gegebenenfalls enthaltener Stoffe bestimmt. Um eine möglichst günstige Brandklasse des Verbundmaterials zu erhalten, sollten vorzugsweise nicht entflammbare Fasertypen, beispielsweise Glas- oder Mineralfasern, oder schwer entflammbare Fasertypen wie beispielsweise TREVIRA C® oder Melaminharzfasern, Aerogele auf anorganischer Basis, besonders bevorzugt auf der Basis von SiO₂, und schwer entflammbare Bindemittel wie beispielsweise anorganische Bindemittel oder Harnstoff- und Melaminformaldehydharze, Silikonharzklebstoffe, Polyimid- und Polybenzimidazol-Harze verwendet werden.

Die erfindungsgemäßen Verbundmaterialien weisen Wärmeleitfähigkeiten von bevorzugt 10 bis 100 mW/m*K, besonders bevorzugt 10 bis 50 mW/m*K, ganz besonders bevorzugt 11 bis 40 mW/m*K, insbesondere bevorzugt 12 bis 22 mW/m*K, auf.
Die vorliegende Erfindung betrifft des Weiteren eine Zusammensetzung zur Herstellung eines erfindungsgemäßen Verbundmaterials enthaltend nanoporöse Partikel, wenigstens ein Isocyanat und wenigstens ein Polymer P ausgewählt aus der Gruppe bestehend aus Polyvinylamin, Polyvinylalkohol, Polyvinylthiol und Mischungen davon. Bezüglich dieser Zusammensetzung gilt das bezüglich des erfindungsgemäßen Verbundmaterials Gesagte entsprechend.

### Herstellung der Verbundmaterialien

Die erfindungsgemäßen Verbundmaterialien werden vorzugsweise dadurch hergestellt, indem die nanoporösen Partikel, das wenigstens eine Isocyanat und das wenigstens eine Polymer P ausgewählt aus der Gruppe bestehend aus Polyvinylamin, Polyvinylalkohol, Polyvinylthiol und Mischungen davonvermischt werden, eine Vernetzung durch Reaktion des wenigstens einen Isocyanates und des wenigstens einen Polymers P durchgeführt wird, und das so erhaltene Material
a) direkt einer Formgebung und gegebenenfalls Härtung unterworfen wird, oder
b) das Material granuliert, gelagert und bei Bedarf einer Formgebung und gegebenenfalls Härtung unterworfen wird.
Die vorliegende Erfindung betrifft daher des Weiteren ein Verfahren zur Herstellung des erfindungsgemäßen Verbundmaterialien, wobei die nanoporösen Partikel, das wenigstens eine Isocyanat und das wenigstens eine Polymer P ausgewählt aus der Gruppe bestehend aus Polyvinylamin, Polyvinylalkohol, Polyvinylthiol und Mischungen davonvermischt werden, eine Vernetzung durch Reaktion des wenigstens einen Isocyanates und des wenigstens einen Polymers P durchgeführt wird, und das so erhaltene Material
a) direkt einer Formgebung und gegebenenfalls Härtung unterworfen wird, oder
b) das Material granuliert, gelagert und bei Bedarf einer Formgebung und gegebenenfalls Härtung unterworfen wird.
Hierbei ist das wenigstens eine Polymer P bevorzugt wasserlöslich oder wasseremulgierbar bzw. -dispergierbar, besonders bevorzugt wasserlöslich. Das wenigstens eine Isocyanat ist bevorzugt in Wasser emulgierbar bzw. so modifiziert, dass es in Wasser emulgierbar ist oder wird durch geeignete Zusatzstoffe in Wasser emulgierbar gemacht.

Bevorzugt werden erfindungsgemäße nanoporöse Partikel, insbesondere Silica-Aerogel-Partikel mit einem mittleren Durchmesser d₅₀ von 0,001 bis 8 mm, beispielsweise mit einer wässrigen Dispersion, die gegebenenfalls Aerosile, Schichtsilikate und/oder Tonminerale und das wenigstens eine Polymer P ausgewählt aus der Gruppe bestehend aus Polyvinylamin, Polyvinylalkohol, Polyvinylthiol und Mischungen davon enthält, beschichtet und/oder vermischt. In einem weiteren Schritt wird bevorzugt anschließend oder im gleichen Arbeitsschritt eine wässrige Emulsion, die das wenigstens eine Isocyanat enthält, zu der Masse zugegeben und mit dieser vermischt. Ggf. können sowohl das wenigstens eine Polymer P als auch das wenigstens eine Isocyanat in der gleichen wässrigen Mischung als Lösung und/oder Emulsion bzw. Dispersion und als Emulsion bzw. Dispersion vorliegen. Anschließend wird die Masse bevorzugt in einer Form aushärten gelassen. Hierbei können Kunststofffolien eingesetzt werden, um die Form auszulegen und ein anschließendes Entformen zu erleichtern.
In einer bevorzugten Ausführungsform des erfindungsgemäßen Verfahrens wird die ausreichend ausgehärtete Masse entformt und getrocknet. In einer besonders bevorzugten Ausführungsform des erfindungsgemäßen Verfahrens wird die ausreichend ausgehärtete Masse nach dem Entformen bei Raumtemperatur und Umgebungsdruck getrocknet. Dies kann z. B. dadurch erfolgen, dass man die Masse auf oder zwischen Gitterrosten lagert, um ein gleichmäßiges Entweichen von Wasser zu ermöglichen.
Die erfindungsgemäßen Verbundmaterialien, insbesondere Platten, zeigen im Allgemeinen eine gewisse Offenporigkeit. Ohne an eine Theorie gebunden sein zu wollen, wird vermutet, dass die Offenporigkeit eine direkte Folge der Bildung von Kohlenstoffdioxid aus der Reaktion von Isocyanat mit Wasser ist. Das Ausmaß der Offenporigkeit ist leicht zu ermitteln durch das von dem Verbundmaterial aufgenommene Wasservolumen nach einer Lagerung unter Wasser (nach EN 12087, Methode 2A, abtropfen).
Die Offenporigkeit ist beispielsweise durch Variation der Konzentrationen der Reaktionspartner und somit durch Variation der entstehenden Kohlenstoffdioxidmenge einstellbar. Die Offenporigkeit der Platten zeigt Vorteile sowohl in der Herstellung, beispielsweise können Restmengen des Prozesshilfsmittels Wasser leichter durch die offenen Poren des Verbundmaterials entfernt werden, als auch in den Endeigenschaften der Platten, da durch die poröse Struktur die Verbundmaterialplatten eine reduzierte Dichte aufweisen, und die Platten durch die offenporige Struktur teilweise luftdurchlässig sind, so dass sie sowohl für Anwendungen im Außen- als auch Innenbereich eingesetzt werden können. Im Innenbereich kann so z. B. einem Befall durch Pilze, z. B: Schimmel o.ä., vorgebeugt werden.
Wird das erfindungsgemäße Verbundmaterial in Form von flächigen Gebilden, beispielsweise Platten oder Matten, insbesondere Platten, verwendet, kann es wenigstens einen weiteren Schaumstoff, insbesondere Polyurethan und/oder Polystyrol, enthalten.

Die vorliegende Erfindung betrifft daher auch Formkörper, insbesondere Platten, aus einem erfindungsgemäßen Verbundmaterial und wenigstens einem weiteren Schaumstoff, insbesondere Polyurethan und/oder Polystyrol.

In dem erfindungsgemäßen Formkörper kann der wenigstens eine weitere Schaumstoff auf das Verbundmaterial kaschiert sein, oder der wenigstens eine weitere Schaumstoff ist mit dem Verbundmaterial gemischt.

Die vorliegende Erfindung betrifft daher bevorzugt den erfindungsgemäßen Formkörper, wobei der wenigstens eine weitere Schaumstoff auf das Verbundmaterial kaschiert ist oder der wenigstens eine weitere Schaumstoff mit dem Verbundmaterial gemischt ist. Verfahren zum Kaschieren sind dem Fachmann an sich bekannt. In einem bevorzugten Verfahren wird das Material zum Kaschieren des erfindungsgemäßen Verbundmaterials im Formgebungsprozess fest mit dem erfindungsgemäßen Verbundmaterial verklebt. Hierzu wird das Material an einer oder mehreren Seiten mit in die Form eingelegt.

Die erfindungsgemäßen Formkörper können in einer weiteren Ausführungsform mit einer Deckschicht beschichtet, bevorzugt kaschiert, sein. In einem bevorzugten Verfahren wird das Material zum Kaschieren des erfindungsgemäßen Verbundmaterials im Formgebungsprozess fest mit dem erfindungsgemäßen Verbundmaterial verklebt. Hierzu wird das Material an einer oder mehreren Seiten mit in die Form eingelegt.

Die vorliegende Erfindung betrifft daher bevorzugt den erfindungsgemäßen Formkörper, wobei wenigstens eine Deckschicht auf das Verbundmaterial kaschiert ist.

Eine entsprechende Deckschicht kann erfindungsgemäß vorliegen, um beispielsweise die Eigenschaften der Oberfläche zu verbessern, so beispielsweise die Robustheit zu erhöhen, sie als Dampfsperre auszubilden oder gegen leichte Verschmutzbarkeit zu schützen. Die Deckschichten können auch die mechanische Stabilität des Formkörpers verbessern. Werden auf beiden Flächen des Formkörpers Deckschichten verwendet, so können diese gleich oder verschieden sein.

Als Deckschichten eignen sich alle dem Fachmann bekannten Materialien. Sie können nichtporös sein und damit als Dampfsperre wirken, wie beispielsweise Kunststofffolien, vorzugsweise Metallfolien oder metallisierte Kunststofffolien, die Wärmestrahlung reflektieren. Es können aber auch poröse Deckschichten verwendet werden, die ein Eindringen von Luft in das Material ermöglichen und damit zu einer besseren Schalldämpfung führen, wie beispielsweise poröse Folien, Papiere, Gewebe oder Vliese, beispielsweise Basaltvliese. Diese porösen Deckschichten haben den Vorteil, dass sie eine schnellere Trocknung des erfindungsgemäßen Verbundmaterials ermöglichen und die Offenporigkeit desselben erhalten. Basaltvliese können beispielsweise die Haftung an Beton verbessern.

Des Weiteren können die Kaschierungen oder Laminierungen beispielsweise unter weitgehender Erhaltung der akustischen Eigenschaften mit so genannten "offenen" Systemen, wie beispielsweise Lochplatten, erfolgen.

Die Deckschichten können selbst auch mehrere Schichten umfassen. Die Deckschichten können mit dem Bindemittel befestigt sein, durch das die Fasern und die Aerogel-Partikel untereinander und miteinander verbunden sind, es kann aber auch ein anderer Kleber Verwendung finden.

Die Oberfläche des Verbundmaterials kann auch durch Einbringen mindestens eines geeigneten Materials in eine Oberflächenschicht geschlossen und verfestigt werden. Als Materialien sind beispielsweise thermoplastische Polymere, wie beispielsweise Polyethylen und Polypropylen, oder Harze wie beispielsweise Melaminformaldehydharze geeignet.

Die erfindungsgemäßen Verbundmaterialien können aufgrund ihrer hervorragenden mechanischen Eigenschaften, beispielsweise erhöhte Bruchfestigkeit, und Wärmedämmeigenschaften, im Allgemeinen können Wärmeleitfähigkeiten von weniger als 0,025 W/mK erreicht werden, auf den verschiedensten Gebieten eingesetzt werden.

Beispiele hierfür sind die Wärme- und/oder Schalldämmung von Gebäuden, Heizkesseln, Kühlgeräten, Backöfen (vgl. EP-A-0 475 285), Heizungsrohren, Fernheizleitungen, Flüssiggasbehältern, Nachtspeicheröfen sowie Vakuumisolierungen von technischen Geräten verschiedenster Art.

Insbesondere eignen sich die erfindungsgemäßen Verbundmaterialien zur Innendämmung, um einen Niedrigenergie-Standard zu erreichen, zur Außendämmung, gegebenenfalls in Kombination mit zementären und anorganischen Klebstoffen, sowie als Teil einer Kombination aus Grundputz, Amierungsmörtel und Oberputz, zur Dachdämmung, sowie in technischen Anwendungen in Kühlschränken, Transportboxen, Sandwich-Bauteilen, Rohrdämmungen und technischen Schäumen.

Ein weiterer Vorteil der erfindungsgemäßen Verbundmaterialien ist daneben, dass ihre Oberfläche homogen und glatt ist. Die Verbundmaterialien lassen sich außerdem besonders einfach durch Sägen, Schleifen oder Schneiden bearbeiten. Es fallen hierbei keine einzelnen Aerogel-Partikel heraus, so dass auch die bearbeiteten Oberflächen homogen erscheinen.

Ein weiterer Vorteil der erfindungsgemäßen Verbundmaterialien ist, dass sie aufgrund des niedrigen Anteils brennbarer, d. h. organischer, Komponenten eine besonders niedrige Brandlast aufweisen. Dies wird erreicht durch eine generell niedrige Menge an organischem Bindemittel.

Die vorliegende Erfindung betrifft daher auch die Verwendung eines erfindungsgemäßen Verbundmaterials oder eines erfindungsgemäßen Formkörpers zur Wärme- und/oder Schalldämmung.

### Beispiele

In den Beispielen und Vergleichsbeispielen wurden folgende Komponenten verwendet:
- Polymer 1:: Lineares Polyvinylamin Lupamin® Typ 9095 von BASF SE, Ludwigshafen, Deutschland, mittleres Molekulargewicht 340.000 g/mol, 20 gew.-%ige Lösung in Wasser
- Polymer 2:: Polyacrylsäure von Sigma-Aldrich Chemie GmbH, Steinheim, Deutschland, mittleres Molekulargewicht Mw = 100.000 g/mol, 35 gew.-%ige Lösung in Wasser
- Polymer 3:: Polyvinylalkohol von Sigma-Aldrich Chemie GmbH, Steinheim, Deutschland, mittleres Molekulargewicht Mw = 31000 bis 50000 g/mol, 87 bis 89% hydrolysiert, Feststoff
- Prepolymer 1:: Isocyanat, erhalten aus der Reaktion von Basonat® HA 300 (Allophanatmodifiziertes Polyisocyanat basierend auf Isocyanuriertem Hexamethylendiisocyanat, lösungsmittelfrei, NCO-Gehalt 19 bis 20%) mit 2 Gew.-% Pluriol® A500E (methyliertes Polyethylenglykol, mittleres Molekulargewicht 500 g/mol), beide BASF SE, Ludwigshafen, Deutschland, Flüssigkeit
- Prepolymer 2:: Basonat® F 200 WD, wasseremulgierbares Isocyanat auf Basis Hexamethylendiisocyanat, lösungsmittelfrei, von BASF SE, Ludwigshafen, Deutschland, Flüssigkeit
- SiO₂-Aerogel:: Cabot Nanogel TLD 302, SiO₂, (Trimethylsilyl)oxy-modifiziert
- Füllstoff 1:: Aerosil® 200, hydrophile pyrogene Kieselsäure mit einer spezifischen Oberfläche von 200 m²/g, von Evonik Industries AG, Essen, Deutschland, Feststoff
- Füllstoff 2:: Schwerspatmehl C14, 82 Gew.-% BaSO₄, 11 Gew.-% CaF₂, 6 Gew.-% SiO₂, von Sachtleben GmbH, Duisburg, Deutschland, Feststoff
- Glashohlkugeln:: 3M™ Glass Bubbles S32, Hohlkugeldurchmesser 90 % < 70 µm, typische Dichte 320 g/L, von 3M, St. Paul, USA, Feststoff

### Beispiel 1:

Es wurden 100 g SiO₂-Aerogel mit 100 g einer wässrigen Lösung enthaltend 5,8 g Polymer 1 (berechnet als Feststoff) gemischt. Zu dieser Mischung wurde eine Emulsion von 2,9 g Prepolymer 1 in 5 g Wasser, erhalten durch kräftiges Schütteln in einem geschlossenen Kunststoffbehälter, gegeben und nochmals gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,2 cm |
| Dichte: | 120 g/L |
| Bindemittelanteil: | 7,9 Gew.-% |
| Wärmeleitfähigkeit: | 16,7 mW/m*K bei 10 °C |
| Druckfestigkeit/-spannung: | 85 kPa |
| Biegefestigkeit/-spannung bei 10% Stauchung: | 30 kPa |
| E-Modul: | 1030kPa |

### Beispiel 2:

Es wurden 100 g SiO₂-Aerogel mit 100 g einer wässrigen Lösung enthaltend 5,8 g Polymer 1 (berechnet als Feststoff) gemischt. Zu dieser Mischung wurde eine Emulsion von 2,9 g Prepolymer 1 in 5 g Wasser, erhalten durch kräftiges Schütteln in einem geschlossenen Kunststoffbehälter, gegeben und nochmal gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,3 cm |
| Dichte: | 111 g/L |
| Bindemittelanteil: | 8,2 Gew.-% |
| Wärmeleitfähigkeit: | 16,1 mW/m*K bei 10 °C |
| Druckfestigkeit/-spannung: | 41 kPa |
| Biegefestigkeit/-spa nnu ng bei 10% Stauchung: | 20 kPa |
| E-Modul: | 470 kPa |

### Beispiel 3:

Es wurden 100 g SiO₂-Aerogel mit 100 g einer wässrigen Lösung enthaltend 5,8 g Polymer 3 (berechnet als Feststoff) gemischt. Zu dieser Mischung wurde eine Emulsion von 2,9 g Prepolymer 1 in 5 g Wasser, erhalten durch kräftiges Schütteln in einem geschlossenen Kunststoffbehälter, gegeben und nochmal gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,2 cm |
| Dichte: | 116 g/L |
| Bindemittelanteil: | 8,2 Gew.-% |
| Wärmeleitfähigkeit: | 16,1 mW/m*K bei 10 °C |
| Druckfestigkeit/-spannung: | 53 kPa |
| Biegefestigkeit/-spannung bei 10% Stauchung: | 40 kPa |
| E-Modul: | 690 kPa |

### Beispiel 4:

Es wurden 100 g SiO₂-Aerogel mit 100 g einer wässrigen Lösung enthaltend 4,3 g Polymer 3 (berechnet als Feststoff) gemischt. Zu dieser Mischung wurde eine Emulsion von 2,1 g Prepolymer 1 in 5 g Wasser, erhalten durch kräftiges Schütteln in einem geschlossenen Kunststoffbehälter; gegeben und nochmal gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,5 cm |
| Dichte: | 100 g/L |
| Bindemittelanteil: | 6,1 Gew.-% |
| Wärmeleitfähigkeit: | 16,9 mW/m*K bei 10 °C |
| Druckfestigkeit/-spannung: | 27 kPa |
| Biegefestigkeit/-spa nnu ng bei 10% Stauchung: | 20 kPa |
| E-Modul: | 330 kPa |

### Beispiel 5

Es wurden 100 g SiO₂-Aerogel mit 100 g einer wässrigen Lösung enthaltend 7,5 g Polymer 3 (berechnet als Feststoff) gemischt. Zu dieser Mischung wurde eine Emulsion von 3,6 g Prepolymer 1 in 5 g Wasser, erhalten durch kräftiges Schütteln in einem geschlossenen Kunststoffbehälter, gegeben und nochmal gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,4 cm |
| Dichte: | 110 g/L |
| Bindemittelanteil: | 10,1 Gew.-% |
| Wärmeleitfähigkeit: | 16,1 mW/m*K bei 10 °C |
| Druckfestigkeit/-spannung: | 45 kPa |
| Biegefestigkeit/-spannung bei 10% Stauchung: | 40 kPa |
| E-Modul: | 480 kPa |

### Beispiel 6

Es wurden 100 g SiO₂-Aerogel mit 100 g einer wässrigen Lösung enthaltend 9,1 g Polymer 3 (berechnet als Feststoff) gemischt. Zu dieser Mischung wurde eine Emulsion von 4,6 g Prepolymer 1 in 5 g Wasser, erhalten durch kräftiges Schütteln in einem geschlossenen Kunststoffbehälter, gegeben und nochmal gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,5 cm |
| Dichte: | 107 g/L |
| Bindemittelanteil: | 12,4 Gew.-% |
| Wärmeleitfähigkeit: | 17,1 mW/m*K bei 10 °C |
| Druckfestigkeit/-spannung: | 22 kPa |
| Biegefestigkeit/-spannung bei 10% Stauchung: | 30 kPa |
| E-Modul: | 180 kPa |

Durch die erfindungsgemäßen Beispiele kann gezeigt werden, dass gerade der erfindungsgemäße Bindemittelanteil besonders günstige Eigenschaften, z.B. Wärmeleitfähigkeit und mechanische Kenngrößen, erzielt werden.

### Beispiel 7:

Es wurden 100 g SiO₂-Aerogel mit 73,5 g einer wässrigen Lösung enthaltend 4,35 g Polymer 1 (berechnet als Feststoff) gemischt. Diese Mischung wurde mit 26,5 g einer wässrigen Lösung enthaltend 1,45 g Polymer 3 (berechnet als Feststoff) gemischt. Zu dieser Mischung wurde eine Emulsion von 2,9 g Prepolymer 2 in 5 g Wasser, erhalten durch kräftiges Schütteln in einem geschlossenen Kunststoffbehälter, gegeben und nochmal gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,1 cm |
| Dichte: | 129 g/L |
| Bindemittelanteil: | 11,4 Gew.-% |
| Wärmeleitfähigkeit: | 16,7 mW/m*K bei 10 °C |
| Druckfestigkeit/-spannung: | 76 kPa |
| Biegefestigkeit/-spannung bei 10% Stauchung: | 50 kPa |
| E-Modul: | 940 kPa |

### Beispiel 8:

Es wurden 73,5 g einer wässrigen Lösung enthaltend 4,35 g Polymer 1 (berechnet als Feststoff) mit 26,5 g einer wässrigen Lösung enthaltend 1,45 g Polymer 3 (berechnet als Feststoff) gemischt. In diese Lösung wurden 25 g Glashohlkugeln eingerührt. Es wurden 100 g SiO₂-Aerogel mit der oben beschriebenen Mischung verrührt und anschließend eine Emulsion von 2,9 g Prepolymer 2 in 5 g Wasser, erhalten durch kräftiges Schütteln in einem geschlossenen Kunststoffbehälter, zugegeben und nochmal gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,2 cm |
| Dichte: | 148 g/L |
| Bindemittelanteil: | 7,9 Gew.-% |
| Wärmeleitfähigkeit: | 19,0 mW/m*K bei 10 °C |
| Druckfestigkeit/-spannung: | 139 kPa |
| Biegefestigkeit/-spannung | |
| bei 10% Stauchung: | 130 kPa |
| E-Modul: | 2090 kPa |

### Beispiel 9:

Es wurden 73,5 g einer wässrigen Lösung enthaltend 4,35 g Polymer 1 (berechnet als Feststoff) mit 26,5 g einer wässrigen Lösung enthaltend 1,45 g Polymer 3 (berechnet als Feststoff) gemischt. In diese Lösung wurden 2,9 g Füllstoff 1 eingerührt. Es wurden 100 g SiO₂-Aerogel mit der oben beschriebenen Mischung verrührt und anschließend eine Emulsion von 2,9 g Prepolymer 2 in 5 g Wasser, erhalten durch kräftiges Schütteln in einem geschlossenen Kunststoffbehälter, zugegeben und nochmal gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,2 cm |
| Dichte: | 126 g/L |
| Bindemittelanteil: | 10,7 Gew.-% |
| Wärmeleitfähigkeit: | 16,6 mW/m*K bei 10 °C |
| Druckfestigkeit/-spannung: | 53 kPa |
| Biegefestigkeit/-spannung bei 10% Stauchung: | 50 kPa |
| E-Modul: | 700 kPa |

### Beispiel 10:

Es wurden 73,5 g einer wässrigen Lösung enthaltend 4,35 g Polymer 1 (berechnet als Feststoff) mit 26,5 g einer wässrigen Lösung enthaltend 1,45 g Polymer 3 (berechnet als Feststoff) gemischt. In diese Lösung wurden 25 g Füllstoff 2 eingerührt. Es wurden 100 g SiO₂-Aerogel mit 25 g Füllstoff 2 gemischt, mit der oben beschriebenen Mischung verrührt und anschließend eine Emulsion von 2,9 g Prepolymer 2 in 5 g Wasser, erhalten durch kräftiges Schütteln in einem geschlossenen Kunststoffbehälter, zugegeben und nochmal gut durchmischt. Die Masse wurde in eine mit PE-Folie ausgekleidete Metallform der Abmessung 20,4 cm x 20,4 cm x 4 cm gegeben und mittels einer Schraubvorrichtung auf eine Dicke von ca. 2 cm zusammengepresst.

Die gesamte Vorrichtung wurde für 1 h bei 60 °C gelagert, die erhaltene Kompositplatte entformt und bis zur Massenkonstanz bei 60 °C in einem Ofen getrocknet. Folgende Werte wurden an der abgekühlten Platte gemessen:

| | |
|---|---|
| Plattendicke: | 2,1 cm |
| Dichte: | 184 g/L |
| Bindemittelanteil: | 6,5 Gew.-% |
| Wärmeleitfähigkeit: | 19,1 mW/m*K bei 10 °C |
| Druckfestigkeit/-spannung: | 84 kPa |
| Biegefestigkeit/-spannung bei 10% Stauchung: | 80 kPa |
| E-Modul: | 900 kPa |

Geringe Mengen Füllstoff haben einen positiven Einfluss auf die Verarbeitbarkeit der Polymerlösungen, da sich deren Viskosität erhöht und somit eine bessere Verteilung auf und zwischen den Aerogelpartikeln erfolgen kann. Die Endeigenschaften der Kompositplatte bleiben praktisch unverändert.

Höhere Anteile von Glashohlkugeln verbessern auf ähnliche Weise die Verarbeitbarkeit sowie die mechanischen Endeigenschaften der Kompositplatten.

Beispiel 8 zeigt den Einsatz eines Füllstoffes einer relativ geringen Dichte, während in Beispiel 10 ein Füllstoff einer relativ hohen Dichte eingesetzt wird. In beiden Fällen kann durch den Einsatz der zusätzlichen anorganischen Masse die Gesamtbrennbarkeit des Kompositmaterials reduziert werden. Die Auswirkungen auf die physikalischen Eigenschaften weisen tendenziell in die selbe Richtung, sind in ihrer absoluten Größe aber durchaus unterschiedlich, was auf Dichte, Volumen und Oberfläche der jeweiligen Füllstoffe sowie deren Einfluss auf die Verklebung des Kompositmaterials zurückgeführt werden kann.

## Patentansprüche

1. Verbundmaterial, enthaltend Aerogele oder Aerosile und wenigstens ein Bindemittel aufgebaut aus wenigstens einem Isocyanat und wenigstens einem Polymer P ausgewählt aus der Gruppe bestehend aus Polyvinylamin mit einer Molmasse von 10.000 bis 1.000.000 g/mol, Polyvinylalkohol mit einer Molmasse von 10.000 bis 500.000 g/mol, Polyvinylthiol mit einer Molmasse von 10.000 bis 500.000 g/mol und Mischungen davon, **dadurch gekennzeichnet, dass** das wenigstens eine Bindemittel in einer Menge von 0,1 bis 20 Gew.-%, bezogen auf die Menge an Aerogel oder Aerosil, eingesetzt wird, wobei das wenigstens eine Isocyanat ein Prepolymer aus wenigstens einem Isocyanat und wenigstens einer Verbindung enthaltend Zerewitinow-reaktive Gruppen ist.

2. Verbundmaterial nach Anspruch 1, **dadurch gekennzeichnet, dass** die Aerogele oder Aerosile granulär sind.

3. Verbundmaterial nach Anspruch 1 oder 2, **dadurch gekennzeichnet, dass** das Polymer P wasserlöslich oder wasserdispergierbar ist.

4. Verbundmaterial nach Anspruch 1, **dadurch gekennzeichnet, dass** die wenigstens eine Verbindung, enthaltend Zerewitinow-reaktive Gruppen, ein Polyol und/oder eine Sulfonsäure ist.

5. Verbundmaterial nach Anspruch 4, **dadurch gekennzeichnet, dass** das Polyol ein Polyethylenglycol mit einem Molekulargewicht von 200 bis 6.000 g/mol und/oder ein Alkylpolyethylenglykol mit einem Molekulargewicht von 200 bis 2.000 g/mol ist.

6. Verbundmaterial nach einem der Ansprüche 1 bis 5, **dadurch gekennzeichnet, dass** das wenigstens eine Isocyanat wasseremulgierbar ist.

7. Verbundmaterial nach einem der Ansprüche 1 bis 6, **dadurch gekennzeichnet, dass** die Aerogele oder Aerosile eine hydrophobe Beschichtung aufweisen.

8. Zusammensetzung zur Herstellung eines Verbundmaterials nach einem der Ansprüche 1 bis 7, enthaltend Aerogele oder Aerosile, wenigstens ein Isocyanat und wenigstens ein Polymer P ausgewählt aus der Gruppe bestehend aus Polyvinylamin mit einer Molmasse von 10.000 bis 1.000.000 g/mol, Polyvinylalkohol mit einer Molmasse von 10.000 bis 500.000 g/mol, Polyvinylthiol mit einer Molmasse von 10.000 bis 500.000 g/mol und Mischungen davon.

9. Verfahren zur Herstellung eines Verbundmaterials nach einem der Ansprüche 1 bis 7, **dadurch gekennzeichnet, dass** die Aerogele oder Aerosile, das wenigstens eine Isocyanat und das wenigstens eine Polymer P ausgewählt aus der Gruppe bestehend aus Polyvinylamin mit einer Molmasse von 10.000 bis 1.000.000 g/mol, Polyvinylalkohol mit einer Molmasse von 10.000 bis 500.000 g/mol, Polyvinylthiol mit einer Molmasse von 10.000 bis 500.000 g/mol und Mischungen davon vermischt werden, eine Vernetzung durch Reaktion des wenigstens einen Isocyanates und des wenigstens einen Polymers P durchgeführt wird, und das so erhaltene Material
a) direkt einer Formgebung und gegebenenfalls Härtung unterworfen wird, oder
b) das Material granuliert, gelagert und bei Bedarf einer Formgebung und gegebenenfalls Härtung unterworfen wird.

10. Formkörper, insbesondere Platten, aus einem Verbundmaterial gemäß einem der Ansprüche 1 bis 7, und wenigstens einem weiteren Schaumstoff, insbesondere Polyurethan und/oder Polystyrol.

11. Formkörper nach Anspruch 10, **dadurch gekennzeichnet, dass** der wenigstens eine weitere Schaumstoff auf das Verbundmaterial kaschiert ist oder der wenigstens eine weitere Schaumstoff mit dem Verbundmaterial gemischt ist.

12. Formkörper nach Anspruch 10, **dadurch gekennzeichnet, dass** wenigstens eine Deckschicht auf das Verbundmaterial kaschiert ist.

13. Verwendung eines Verbundmaterials nach einem der Ansprüche 1 bis 7 oder eines Formkörpers nach einem der Ansprüche 10 bis 12 zur Wärme- und/oder Schalldämmung.

## Claims

1. A composite material comprising aerogels or aerosils and at least one binder constructed from an at least one isocyanate and at least one polymer P selected from the group consisting of polyvinylamine with a molar mass of 10 000 to 1 000 000 g/mol, polyvinyl alcohol with a molar mass of 10 000 to 500 000 g/mol, polyvinylthiol with a molar mass of 10 000 to 500 000 g/mol and mixtures thereof, wherein said at least one binder is used in an amount of 0.1 to 20 wt%, based on the amount of aerogel or aerosil, where said at least one isocyanate is a prepolymer formed from at least one isocyanate and at least one compound comprising Zerewitinow-reactive groups.

2. The composite material according to claim 1 wherein the aerogels or aerosils are granular.

3. The composite material according to claim 1 or 2 wherein said polymer P is water-soluble or water-dispersible.

4. The composite material according to claim 1 wherein said at least one compound comprising Zerewitinow-reactive groups is a polyol and/or a sulfonic acid.

5. The composite material according to claim 4 wherein said polyol is a polyethylene glycol having a molecular weight of 200 to 6000 g/mol and/or an alkylpolyethylene glycol having a molecular weight of 200 to 2000 g/mol.

6. The composite material according to any of claims 1 to 5 wherein said at least one isocyanate is water-emulsifiable.

7. The composite material according to any of claims 1 to 6 wherein said aerogels or aerosils have a hydrophobic coating.

8. A composition for producing a composite material according to any of claims 1 to 7, comprising areogels or aerosils, at least one isocyanate and at least one polymer P selected from the group consisting of polyvinylamine with a molar mass of 10 000 to 1 000 000 g/mol, polyvinyl alcohol with a molar mass of 10 000 to 500 000 g/mol, polyvinylthiol with a molar mass of 10 000 to 500 000 g/mol and mixtures thereof.

9. A process for producing a composite material according to any of claims 1 to 7, which comprises mixing said aerogels or aerosils, said at least one isocyanate and said at least one polymer P selected from the group consisting of polyvinylamine with a molar mass of 10 000 to 1 000 000 g/mol, polyvinyl alcohol with a molar mass of 10 000 to 500000 g/mol, polyvinylthiol with a molar mass of 10 000 to 500 000 g/mol and mixtures thereof, crosslinking by reacting said at least one isocyanate and said at least one polymer P and the material thus obtained being either
a) subjected directly to a shaping operation and optional curing, or
b) pelletized, stored and subjected to shaping and optionally curing as or when required.

10. A shaped article, more particularly a plate, formed from a composite material according to any of claims 1 to 7 and at least one further foam, more particularly polyurethane and/or polystyrene.

11. The shaped article according to claim 10 wherein said at least one further foam is laminated on said composite material or said at least one further foam is mixed with said composite material.

12. The shaped article according to claim 10 wherein at least one outer layer is laminated on said composite material.

13. The use of a composite material according to any of claims 1 to 7 or of a shaped article according to any of claims 10 to 12 for thermal and/or acoustical insulation.

## Revendications

1. Matériau composite, contenant des aérogels ou des aérosils et au moins un liant formé par au moins un isocyanate et au moins un polymère P choisi dans le groupe constitué par une polyvinylamine ayant une masse molaire de 10 000 à 1 000 000 g/mol, un alcool polyvinylique ayant une masse molaire de 10 000 à 500 000 g/mol, un polyvinylthiol ayant une masse molaire de 10 000 à 500 000 g/mol et leurs mélanges, **caractérisé en ce que** ledit au moins un liant est utilisé en une quantité de 0,1 à 20 % en poids, par rapport à la quantité d'aérogel ou d'aérosil, ledit au moins un isocyanate étant un prépolymère d'au moins un isocyanate et d'au moins un composé contenant des groupes réactifs selon Zerewitinow.

2. Matériau composite selon la revendication 1, **caractérisé en ce que** les aérogels ou les aérosils sont granulaires.

3. Matériau composite selon la revendication 1 ou 2, **caractérisé en ce que** le polymère P est soluble dans l'eau ou dispersible dans l'eau.

4. Matériau composite selon la revendication 1, **caractérisé en ce que** ledit au moins un composé contenant des groupes réactifs selon Zerewitinow est un polyol et/ou un acide sulfonique.

5. Matériau composite selon la revendication 4, **caractérisé en ce que** le polyol est un polyéthylène glycol ayant un poids moléculaire de 200 à 6 000 g/mol et/ou un alkylpolyéthylène glycol ayant un poids moléculaire de 200 à 2 000 g/mol.

6. Matériau composite selon l'une quelconque des revendications 1 à 5, **caractérisé en ce que** ledit au moins un isocyanate est émulsifiable dans de l'eau.

7. Matériau composite selon l'une quelconque des revendications 1 à 6, **caractérisé en ce que** les aérogels ou les aérosils comprennent un revêtement hydrophobe.

8. Composition pour la fabrication d'un matériau composite selon l'une quelconque des revendications 1 à 7, contenant des aérogels ou des aérosils, au moins un isocyanate et au moins un polymère P choisi dans le groupe constitué par une polyvinylamine ayant une masse molaire de 10 000 à 1 000 000 g/mol, un alcool polyvinylique ayant une masse molaire de 10 000 à 500 000 g/mol, un polyvinylthiol ayant une masse molaire de 10 000 à 500 000 g/mol et leurs mélanges.

9. Procédé de fabrication d'un matériau composite selon l'une quelconque des revendications 1 à 7, **caractérisé en ce que** les aérogels ou les aérosils, ledit au moins un isocyanate et ledit au moins un polymère P choisi dans le groupe constitué par une polyvinylamine ayant une masse molaire de 10 000 à 1 000 000 g/mol, un alcool polyvinylique ayant une masse molaire de 10 000 à 500 000 g/mol, un polyvinylthiol ayant une masse molaire de 10 000 à 500 000 g/mol et leurs mélanges sont mélangés, une réticulation par réaction dudit au moins un isocyanate et dudit au moins un polymère P est réalisée, et le matériau ainsi obtenu
a) est soumis directement à un façonnage et éventuellement à un durcissement, ou
b) le matériau est granulé, entreposé et, à la demande, soumis à un façonnage et éventuellement à un durcissement.

10. Corps moulés, notamment plaques, constitués par un matériau composite selon l'une quelconque des revendications 1 à 7, et au moins une autre mousse, notamment du polyuréthane et/ou du polystyrène.

11. Corps moulés selon la revendication 10, **caractérisés en ce que** ladite au moins une autre mousse est stratifiée sur le matériau composite ou ladite au moins une autre mousse est mélangée avec le matériau composite.

12. Corps moulés selon la revendication 10, **caractérisés en ce qu'**au moins une couche de recouvrement est stratifiée sur le matériau composite.

13. Utilisation d'un matériau composite selon l'une quelconque des revendications 1 à 7 ou d'un corps moulé selon l'une quelconque des revendications 10 à 12 pour l'isolation thermique et/ou sonore.
